# EUROPEAN PATENT SPECIFICATION

(11) **EP 1 350 402 B1**
(45) Date of publication and mention of the grant of the patent: **24.11.2010**
(21) Application number: 02729603.7
(22) Date of filing: 09.01.2002
(51) Int. Cl.: H04W 4/12

(54) **METHOD FOR SHORT MESSAGE SERVICE FORWARDING DELIVERY**
VERFAHREN ZUR KURZNACHRICHTENDIENSTWEITERLEITUNGSABLIEFERUNG
PROCEDE POUR LA DELIVRANCE DE MESSAGES PAR RETRANSMISSION DANS UN SERVICE D'ENVOI DE MESSAGES COURTS

(30) Priority: 10.01.2001 US 757717
(43) Date of publication of application: 08.10.2003
(73) Proprietor: Telefonaktiebolaget LM Ericsson (publ), 164 83 Stockholm (SE)
(72) Inventor: ROCHA AVALOS, Roberto, Saltillo, Coahuila, C.P. 25270 (MX); MONSIVAIS DE VALLE, Hector, Saltillo, Coahuila, C.P. 25230 (MX)
(74) Representative: Tonscheidt, Andreas
(86) International application number: PCT/SE2002/000022
(87) International publication number: WO 2002/056611

(56) References cited:
- WO-A1-01/22751
- WO-A2-98/32300
- US-A- 5 946 630

## Description

### Technical Field

This invention relates generally to messaging systems and methods. More particularly, the invention relates to Short Message Service (SMS) delivery services conducted within a telecommunications network.

### History of Related Art

The Short Message Service (SMS) provides the ability to send and receive short messages of up to 160 characters using a mobile phone. SMS was conceived as part of the Global System for Mobile communications (GSM) digital standard. SMS is typically used to communicate information when voice or audio is not the best medium. For example, when relating a phone number or other numerical information to another party, it is easier to send the number as a character message, where it can be extracted and stored in memory, rather than attempting to verbally relay the number, memorize it, and re-key it into a phone or other communications device for storage. Thus, SMS is a useful service for communicating non-audio information in many situations.

There are certain occasions when the intended recipient of SMS messages is unable to receive them. For example, when the intended destination telephone is busy, or unavailable (i.e., not responding due to being located outside the service zone, or being turned off). When these situations arise, the intended recipient must rely on a Message Center (MC) to deliver the messages at some later tune. However, there is no guarantee that the MC will ultimately deliver the message to the intended recipient if his telephone is busy or unavailable. Further, there are times when the intended SMS recipient is waiting for a particular call, or otherwise occupied, and does not wish to receive any SMS messages. It is during these times that forwarding SMS messages to some guaranteed deliverable, alternative destination, would be desirable.

Thus, what is needed is a method of delivering SMS messages to the intended recipient even when the recipient's telephone is busy or unavailable. Further, such a method should provide the ability to deliver messages to an alternative destination. The method would be most useful if the message forwarding could be made contingent on instructions by the recipient, such as forwarding the message unconditionally, forwarding the message when the recipient telephone is busy, or forwarding the message when the recipient telephone does not respond. Finally, the method would also be most useful if the forwarding destination could also be selected, such as an alternate mobile telephone, a node, an e-mail address on a computer network, etc.
International patent application WO 98/32300 already describes a method and system for the routing of messages, e.g. SMS messages, in a radio communication system. The messages can be routed through a service center associated with an originating mobile and a message center associated with the recipient mobile. The routing information for routing the message depends on a subscription of the recipient to an enhanced message routing service. However, this patent application does not solve the above deficiencies.

### SUMMARY OF THE INVENTION

The invention provides a method for forwarding discrete messages, such as SMS messages, from an initial destination (e.g., a cellular telephone) to a forwarding destination (e.g., an alternate cellular telephone, or a network address such as IP address or e-mail address). The method allows the intended recipient to specify the forwarding destination, and whether message forwarding will occur unconditionally, only when the recipient is busy, or only when the recipient telephone does not respond.

In its simplest form, the method includes the steps of activating a forwarding feature, sending a discrete message to the initial destination, and determining that the forwarding feature is activated. Of course, if it can not be determined that the forwarding feature has been activated, then the method terminates.

If the forwarding feature has indeed been activated, then the method may also include the steps of providing the forwarding destination, and sending the discrete message to the forwarding destination. These steps are used when the forwarding feature has been unconditionally activated.

If the forwarding feature is to be activated only when the initial destination is busy, then the forwarding destination will be provided, and the discrete message will be forwarded when the initial destination is busy. Similarly, if the forwarding feature has been requested for activation only when the initial destination is not responding, then the forwarding destination will be provided and the discrete message will be sent to the forwarding destination when the initial destination is not responding.

The forwarding destination may be an alternate telephone number, a network address, or any other destination which can be specified within a network data message. Activation of a forwarding feature can be requested by the intended recipient, the service provider, or triggered by REGISTRATIONNOTIFICATION/ QUALIFICATIONREQUEST messages within American National Standards Institute - 41 (ANSI-41) network protocol operations.

### BRIEF DESCRIPTION OF THE DRAWINGS

A more complete understanding of the structure and operation of the present invention may be had by reference to the following detailed description when taken in conjunction with the accompanying drawings, wherein:
Figs. 1A, 1B and 1C are network operational diagrams illustrating activation of the forwarding feature;
Fig. 2 is a network operational diagram illustrating the method of the present invention wherein the forwarding feature is activated unconditionally;
Fig. 3 is a network operational diagram illustrating the method of the present invention when the forwarding destination is the Internet;
Fig. 4 is a network operational diagram illustrating the method of the present invention when the forwarding feature is activated when the initial destination is busy;
Fig. 5 is a network operational diagram illustrating the method of the present invention when the forwarding feature is activated when the initial destination is not responding; and
Figs. 6A, 6B, and 6C are network operational diagrams illustrating the method of the present invention when message forwarding does not occur.

### DETAILED DESCRIPTION OF PRESENTLY PREFERRED EXEMPLARY EMBODIMENTS

The invention provides a method to forward discrete messages, upon request, from an intended recipient, or initial destination, to a selected forwarding destination. The intended recipient, typically operating a mobile cellular telephone, may select not only the forwarding destination, but may also select the conditions under which messages are forwarded: unconditionally, when his phone is busy, or when his phone is non-responsive (i.e., turned off, out of the service area, MS unknown, the MS has not subscribed to SMS, the addresses MS is unknown, or the SMS TeleserviceID is invalid).

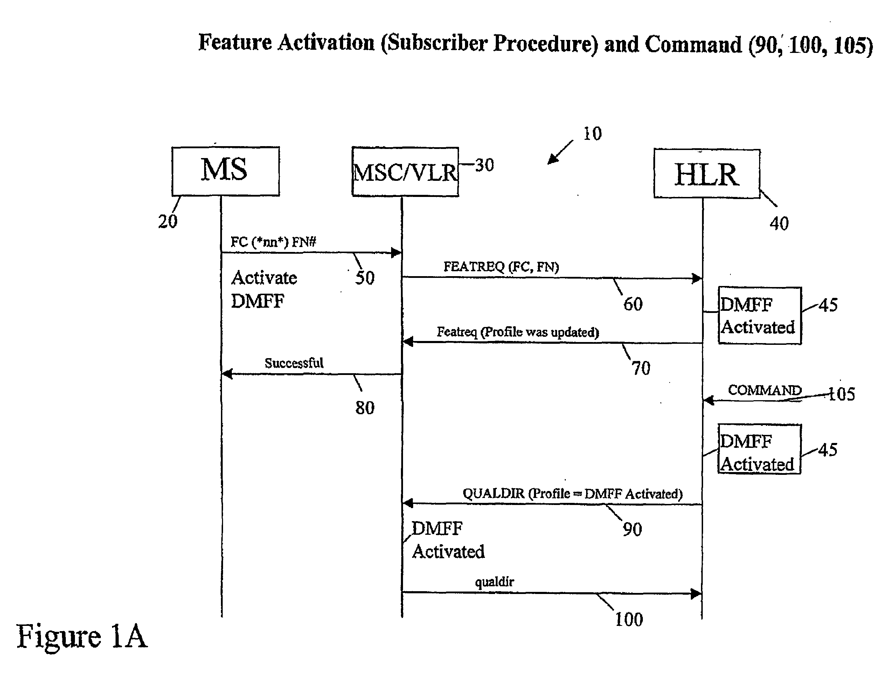

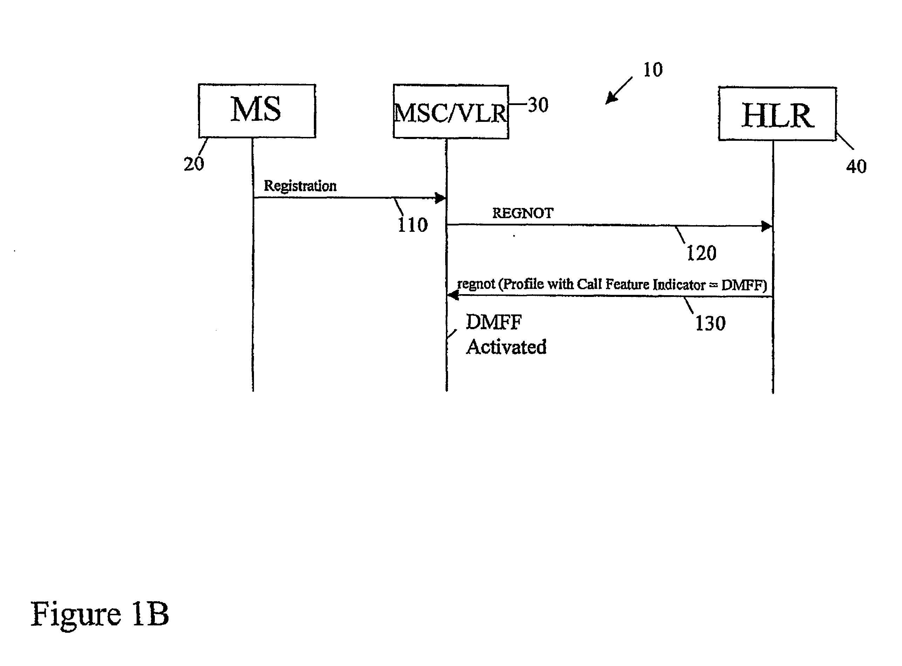

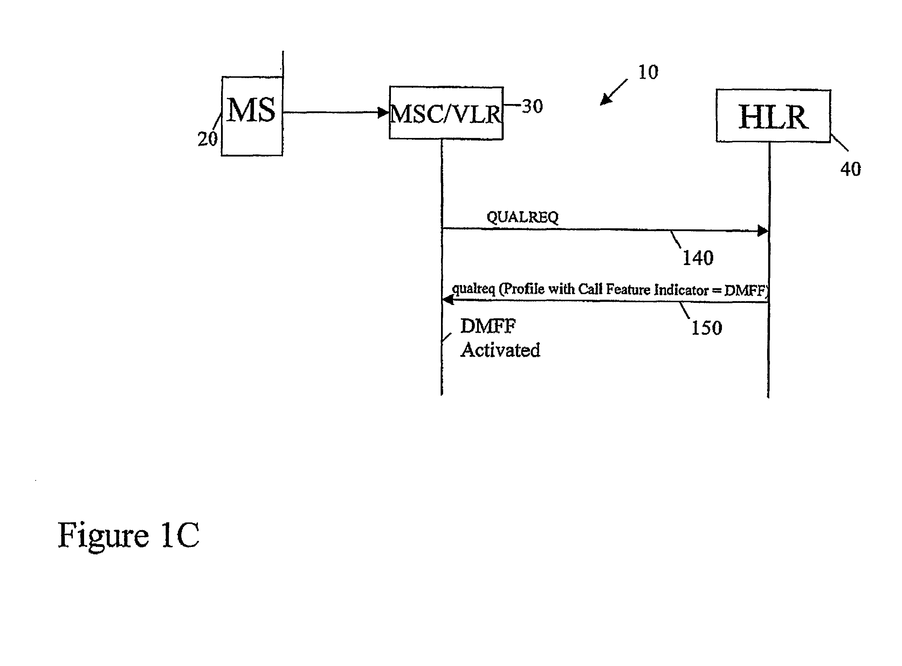

Turning now to Figs. 1A, 1B, and 1C, a network diagram illustrating activation of the forwarding feature can be seen. In Fig. 1A, the network **10** includes a Mobile Station (MS) **20,** a Mobile Switching Center/Visitor Location Register (MSC/VLR) **30,** and a Home Location Register (HLR) **40.** In this scenario, wherein the subscriber operating the MS **20** requests activation of the forwarding feature, an activation feature code, along with the forwarding destination, is entered by the subscriber, typically using the keypad of a cellular telephone, and sent to the MSC/VLR **30** in step **50.** If the network **10** is an ANSI-41 compliant network, as shown in Fig. 1A, then a FEATUREREQUEST message is sent from the MSC/VLR **30** to the HLR **40,** requesting that the user profile for the MS **20** be updated to indicate that the forwarding feature has been activated in step **60.** After the profile has been updated, a featurerequest response message is sent from the HLR **40** to the MSC/VLR **30** in step **70,** and typically, a confirmation message, indicating that the activation was successful, is sent from the MSC/VLR **30** to the MS **20** in step **80.** The confirmation message may take the form of a message displayed on the MS **20** display, or an announcement to the subscriber. The confirmation message is typically followed by a QUALIFICATIONDIRECTIVE message from the HLR **40** to the MSC/VLR **30** in step **90,** to update the profile information within the MSC/VLR **30** (to indicate that the forwarding feature is activated). To close the transaction, a qualificationdirective response message is returned from the MSC/VLR **30** to the HLR **40** in step **100.** At this time, the HLR **40** will mark the forwarding feature as active in the user's profile, and store the forwarding destination address **45** (shown as FN# in Fig. 1A which can be a telephone number, an IP address or e-mail address).

If the forwarding destination is not SMS capable, or is not a valid destination, then the user profile may be updated, prompting unsuccessful forwarding of the message, until such time as the forwarding destination becomes SMS capable. Alternatively, the user profile may not be updated, and notification of the unsuccessful profile update will be sent to the user (not shown).

Turning now to Fig. 1B, a network operational diagram illustrating activation of the forwarding feature upon registration can be seen. In this case, when the MS **20** attempts to register with the MSC/VLR **30,** by way of autonomous registration in step **110,** for example, the MSC/VLR **30** sends a REGISTRATIONNOTIFICATION message from the MSC/VLR **30** to the HLR **40** in step **120,** and the HLR **40** responds with a registrationnotification response, including the user profile, and an indication that the forwarding feature is activated in step **130.** At this time, the MSC/VLR **30** is now "aware" that the forwarding feature has been activated for the MS **20.** A similar operation occurs when an MSC/VLR in a network requests validation of an MS, such that a QUALIFICATIONREQUEST message is sent from the MSC/VLR **30** to the HLR **40** in step **140,** and the qualificationrequest response includes the profile, with an indication that the forwarding feature is active, in step **150** (see Fig. 1C). It should be noted that in all the operations illustrated in Figs. 1A, 1B, and 1C, the type of activation for the forwarding feature depends on either the feature code (for a subscriber activation request), the command from an operator, or the type of activation indicated in the user profile. Thus, for example, a subscriber may request unconditional activation, activation when busy, or activation when not responding, using different feature code combinations.

The forwarding feature may also be activated by command of the service provider operator, as shown in Fig. 1A. Here, a command can be issued by the operator in step **105** to the HLR **40,** which directs the HLR **40** to send a QUALIFICATIONDIRECTIVE message, including profile information indicating that the forwarding feature has been activated in the user profile in step **90,** which provokes a qualificationdirective response, confirming update of the user profile in the MSC/VLR **30,** in step **100.** If the requested forwarding destination is not SMS capable, or a valid destination, the user profile will not be updated, and notification of the unsuccessful profile update will be sent to the user (not shown).

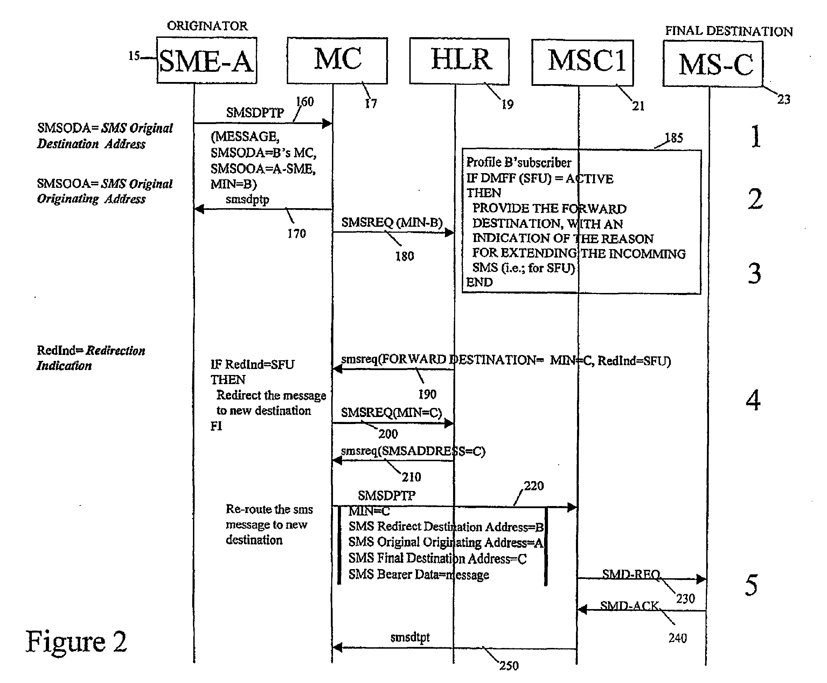

A network operational diagram, illustrating the method of the present invention wherein a discrete message, in the form of an SMS message, is forwarded unconditionally to a mobile station, is shown in Fig. 2. Here, the originator of the message, Short Message Entity (SME) **15** sends a short message to Mobile Identification Number B (MINB), which is served by the Message Center (MC) **17** and the HLR **19.** In this case, MINE represents the initial destination.

The message is sent using an SMS Delivery Point-To-Point (SMSDPTP) Invoke operation, which includes the short message itself, the SMS original, or initial destination address (which is the MC for MINB), the SMS original originating address, which is the address for the SME **15,** and the initial destination, or MINB. The SMSDPTP Invoke message is sent from the SME **15** to the MC **17** in step **160.** A smsdptp response is returned from the MC **17** to the SME **15** to acknowledge receipt of the original SMSDPTP message. In step **180,** the MC **17** sends a request to the HLR **19** to provide the address of the MINB in step **180.** This request from the MC **17** to the HLR **19** takes the form of an SMSREQUEST, which contains the MINB. The HLR checks to determine that the forwarding feature is activated by referring to the subscriber profile associated with the MINB in step **185.** In the response (step **190),** the MC **17** receives the information that the forwarding feature is unconditionally activated (i.e., the redirection indication equals SFU), and that the forwarding destination is the Mobile Identification Number (MEN) associated with a user "C", or MINC.

In this scenario, the method includes the steps of providing the forwarding destination, and sending the discrete message, in the form of an SMS message, to the forwarding destination. Thus, the SMSREQUEST, containing the MINC is sent back to the HLR **19** (in step 200), assuming that the HLR **19** serves both user "B" and user "C". The response, received in step **210,** includes the SMSADDRESS, which points to MSC/VLR1 **21.**

The message is now rerouted, using the SMSDPTP operation, to mobile station "C" in step **220.** At this time, the MIN is that of the entity serving MS "C" (i.e., MS-C) **23,** the SMS redirect destination address is that for MS "B" (not shown), and the SMS original originating address is that for entity "A" (e.g. MS "A", not shown), served by SME-A **15.** The final destination address is that for MS-C **23** and the SMS Bearer Data is the message itself. The short message is delivered to the MS-C **23** in step **230,** and receipt of the message is acknowledged in step **240** by the MS-C **23** to the MSC/VLR1 **21.** The transaction is closed with an smsdptp response in step **250,** from the MSC/VLR1 **21** to the MC **17.**

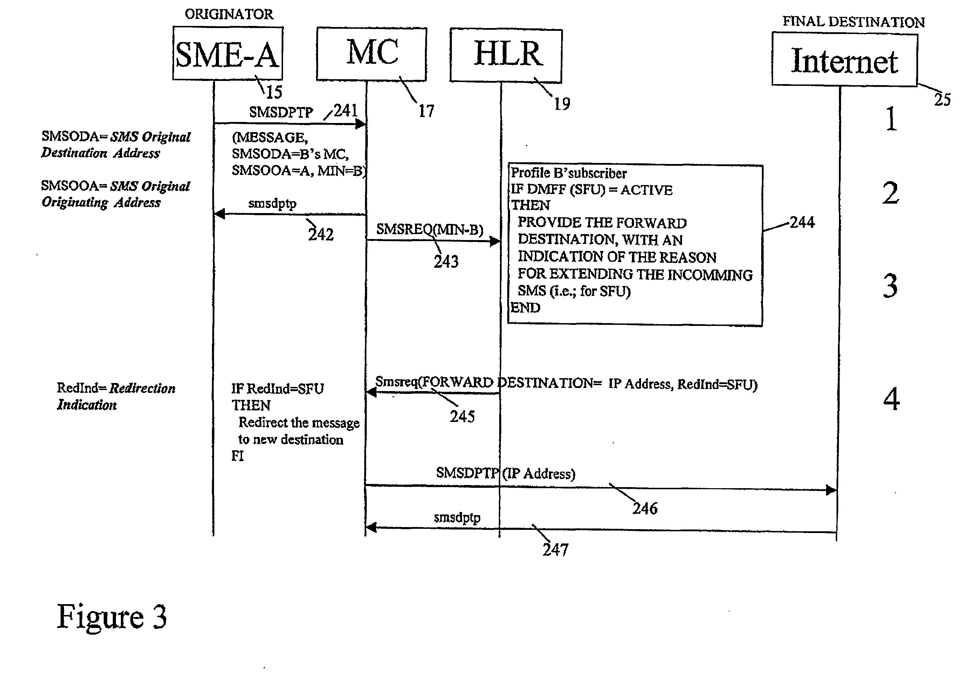

Fig. 3 illustrates a network operational diagram wherein the short message is forwarded unconditionally to the Internet. In this case, the message originator **15,** which might be a node or MSC/VLR for entity "A" (e.g., a mobile cellular telephone), sends an SMSDPTP message to the MC **17** in step **241.** An smsdptp response is returned from the MC **17** to the message originator **15** in step **242.** Again, an SMSREQUEST, including the MINB is sent from the MC **17** to the HLR **19** for entity "B", which may be another mobile cellular telephone. This request for the address of MINB occurs in step **243.** The HLR **19** checks to determine whether the forwarding feature has been activated in step **244.** Upon determining that the forwarding feature has been activated unconditionally, the forwarding destination, which in this case is an Internet address, is returned in the smsrequest response in step **245.** It is important to note that in this instance, as well as in that illustrated in Fig. 2, the forwarding feature has been activated unconditionally, and therefore, whether the intended recipient (i.e., entity "B") is busy or not responding does not matter. All discrete messages will be forwarded, regardless of the status of the intended recipient. Thus, a new SMSDPTP message is sent from the MC **17** to the Internet, containing the forwarding destination address in the form of an Internet Address or E-mail Address **25,** in step **246.** The smsdptp response, used to the close the transaction, is returned from the Internet **25** to the MC **17** in step **247.**

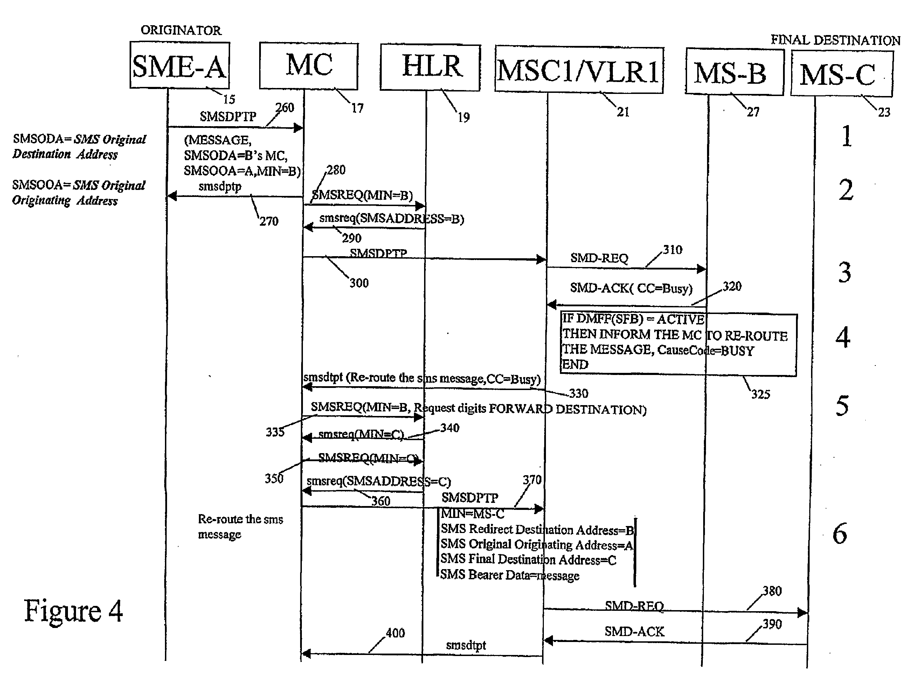

Turning now to Fig. 4, a network operational diagram illustrating the method of the present invention wherein the forwarding feature is activated when the initial destination is busy. Thus, the initial destination (i.e., MINB, or entity "B") toward which the discrete message is directed has previously requested activation of the forwarding feature when the initial destination is busy, and provided a forwarding destination to the HLR **19.**

When the message originator **15,** such as a MSC/VLR serving entity "A" sends an SMSDPTP message in step **260,** the message is acknowledged by an smsdptp response in step **270.** The SMSDPTP message contains the SMS message itself, the initial destination address (i.e., the MC **17** for MINE), and the SMS originating entity address (i.e., the address for entity "A"), along with MINB itself.

The MC **17** then responds by sending an SMSREQUEST message containing the MINB in step **280** to the HLR **19.** The smsrequest response, containing the SMSADDRESS for MINB is returned by the HLR **19** to the MC **17** in step **290.**

After receiving the SMSADDRESS, the MC **17** requests delivery of the SMS message by MSC/VLR1 **21** (which serves the initial destination, MS-B **27)** using an SMSDPTP message in step **300.** Delivery is attempted in step **310,** and fails because the request is acknowledged with an indication that the MS-B **27** is busy in step **320.** The MSC/VLR1 **21** then checks to determine that the forwarding feature has been activated in step **325,** and since the forwarding feature is indeed activated when the initial destination is busy, the MSC/VLR **21** sends the forwarding information, directing the MC **17** to reroute the SMS message using an smsdptp response in step **330.** An SMSREQUEST message in step **335** is used to request the forwarding destination from the HLR **19,** and the SMSREQUEST response, including MINC, is returned to the MC **17** in step **340.**

The MC **17** then sends a new SMSREQUEST containing the MIN C to the HLR **19,** requesting the SMSADDRESS for MS-C 23 in step **350,** in this case the SMSADDRESS for entity "C", or MS-C **23** is returned in the smsrequest response in step **360.**

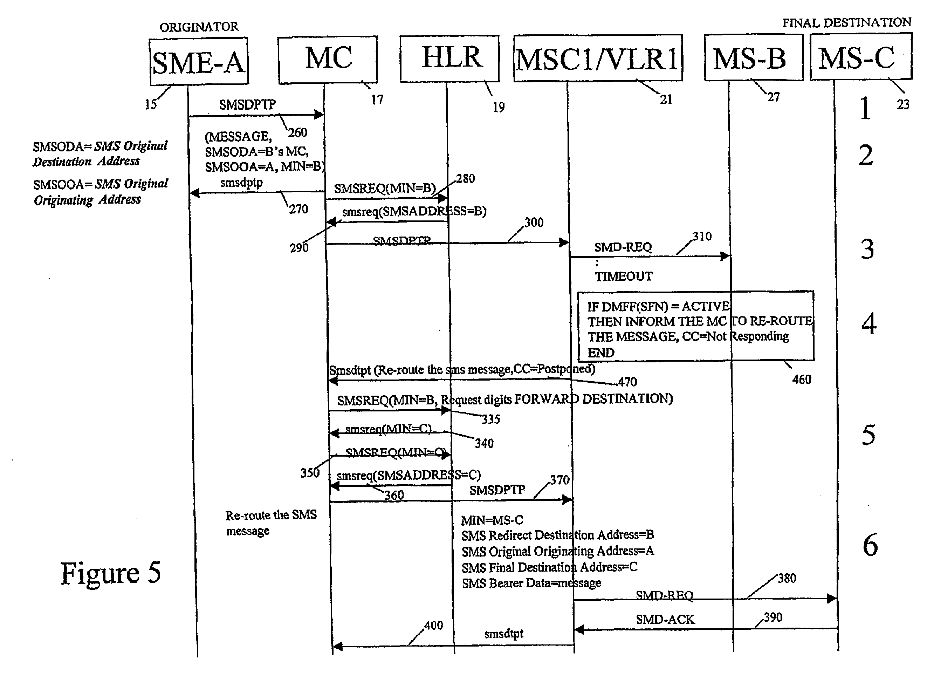

Once the MC **17** receives the forwarding address for MS-C **23,** the MC **17** requests that the discrete message be forwarded to MS-C **23** using an SMSDPTP message in step **370.** The message is delivered in step **380,** and delivery/receipt is acknowledged in step **390.** The transaction is closed using an smsdptp response in step **400.** A similar process is illustrated in Fig. 5, which shows a network operational diagram of the method wherein the forwarding feature has been activated when the initial destination is not responding. In this case, the forwarding feature has been activated for MS-B **27** such that messages are forwarded to the alternative destination, MS-C **23,** when the status of the MS-B **27** is "not responding" (i.e., turned off, out of the service area, MS unknown, the MS has not subscribed to SMS, the addresses MS is unknown, the SMS TeleserviceID is invalid).

In this case, steps **260-310** are identical to those described for Fig. 4. That is, a short message is originated and sent to the MC **17,** the SMSADDRESS for MS-B **27** is requested and received by the MC **17,** and a request to deliver the message, and an attempt to deliver the message, are made in steps **300** and **310.** However, in this case, instead of the MS-B **27** being busy, it is not responding, and therefore, no acknowledgment is received by the MSC/VLR1 **21** from the MS-B **27.** After an acknowledgment time-out occurs, the MSC/VLR1 **21** checks to determine if the forwarding feature has been activated, and if so, whether the forwarding feature has been activated when the initial destination is not responding in step **460.** In this case, the forwarding feature has indeed been activated, and is activated when the initial destination is not responding.

Thus, the smsdptp response is sent from the MSC/VLR1 **21** to the MC **17,** directing the MC **17** to reroute the SMS message in step **470.** Steps **335-400** are the same as those described for Fig. 4. That is, a new request for the identity and address of the forwarding destination is made by the MC **17,** and after the SMSADDRESS for MS-C **23** is received by the MC **17,** a request for delivery of the message is made to the MSC/VLR **21.** The message is then delivered, acknowledged, and the transaction is closed in steps **380-400.**

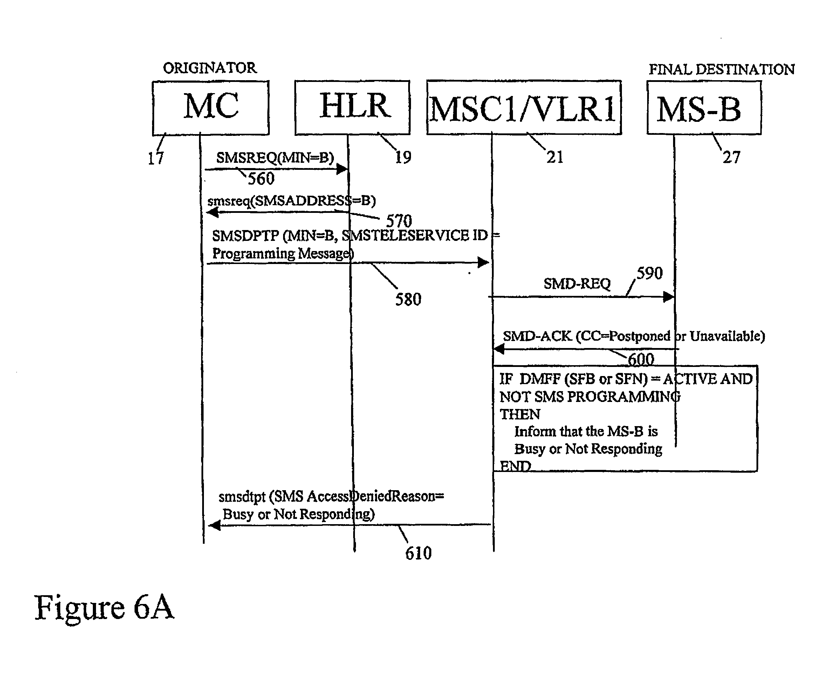

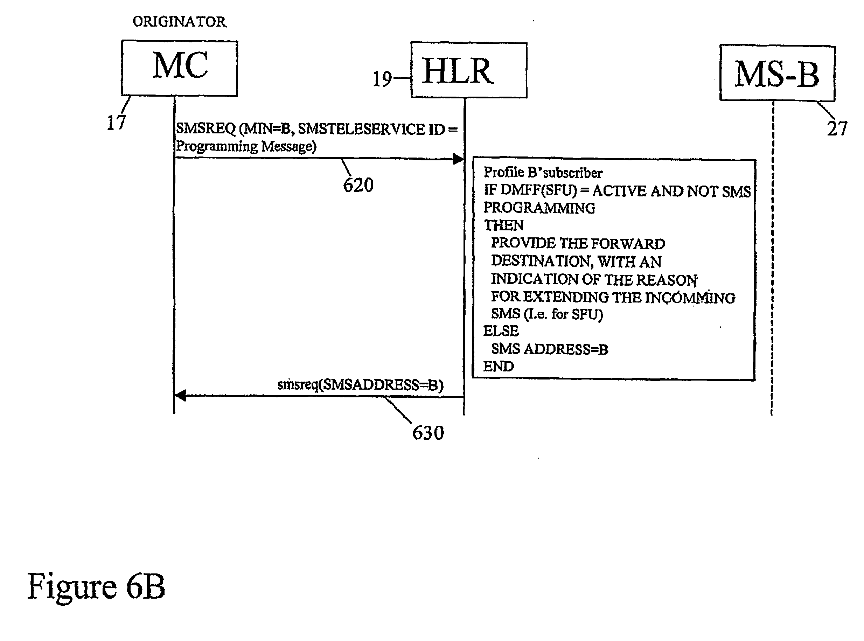

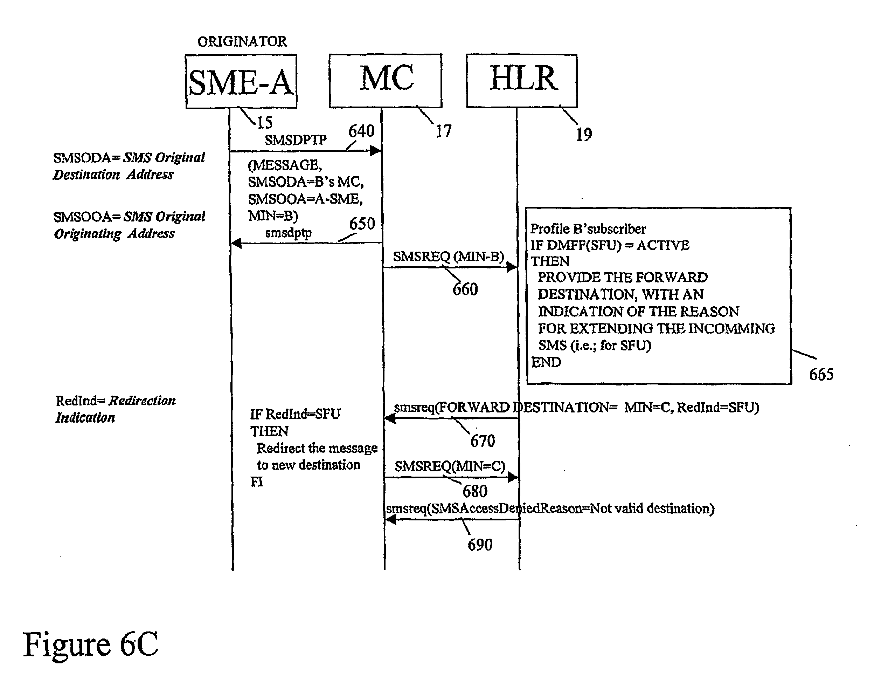

Figs. 6A, 6B, and 6C are network operational diagrams illustrating the method of the invention as it operates when the discrete message should not be forwarded (e.g., the SMS message is a programming message specific to the intended recipient), or it is impossible to deliver the discrete message (e.g., the forwarding destination is invalid). Figs. 6A and 6B illustrate the circumstances wherein the discrete message is a programming message specific to MS-B **27.** In Fig. 6A, the MC **17** sends an SMSREQUEST message directed toward MS-B **27** in step **560,** in order to determine the forwarding destination address of MS-B **27.** The smsrequest response containing the SMSADDRESS for MS-B **27** is returned by the HLR **19** to the MC **17** in step **570.** Then, the MC **17** requests the MSC/VLR **121** to deliver the message to MS-B **27** using an SMSPTP message in step **580** containing the SMS Teleservice Indicator parameter, which indicates that the SMS message is a programming message specific to the intended recipient. Delivery is attempted in step **590,** however, the MS-B **27** is not responding, or busy. Thus, the delivery attempt is acknowledged in step **600** to the MSC/VLR1 **21** by the MS-B **27.**

At this point, the MSC/VLR **21** checks to determine if the forwarding feature is activated when the initial destination is not responding or busy. Since this is indeed the case, and delivery of the SMS message (which is a programming message) is not appropriate, the smsdptp response indicates the condition of the MS-B **27** as not responding or busy in step **610,** and the programming message is not forwarded. Thus, in this case, the delivery of the programming message occurs by way of conventional methods, well known to those skilled in the art.

The scenario depicted in Fig. 6B is similar to that shown in Fig. 6A, except that the forwarding feature is activated unconditionally. In this case, the MC **17** requests the address for MS-B **27** from the HLR **19** by sending a SMSREQ message **620** containing the SMS Teleservice Indicator parameter, which indicates that the SMS message is a programming message specific to the intended recipient. Since the DMFF is activated unconditionally and the SMS is a programming message; then it would not be appropriate to forward a programming message intended for the MS-B **27,** the smsrequest response returned in step **630** contains the SMSADDRESS for MS-B **27.** Thus, the message, which is a programming message intended for the initial destination, is not forwarded. Message delivery is again accomplished using conventional methods well known to those skilled in the art.

Turning now to Fig. 6C, the method of the invention is illustrated when forwarding is not possible because the forwarding destination is invalid, or not SMS capable. In this instance, the originating entity sends the SMS message by way of the MC **17** in step **640,** to MS-B **27.** After acknowledging receipt of the message with the smsdptp response in step **650,** the MC **17** sends a request to the HLR **19** for the address of MS-B **27** in step **660.** Since the forwarding feature is activated (in this case, unconditionally, as determined in step **665),** then the forwarding destination is returned by the HLR **19,** along with an indication of the activation type, in the smsrequest response of step **670.** The MC **17** then submits an SMSREQUEST message, requesting the address of the forwarding destination (MS-C **23,** which is not SMS-capable in this scenario) in step **680.** Since MS-C **23** is not SMS-capable, the smsrequest response returned in steps **690,** normally containing the SMSAccessDeniedReason, informs the MC **17** that the forwarding destination is invalid.

Although the invention has been described with reference to specific embodiments, this description is not meant to be construed in a limited sense. The various modifications of the disclosed embodiments, as well as alternative embodiments of the invention, will become apparent to persons skilled in the art upon reference to the description of the invention. It is, therefore, contemplated that the appended claims will cover such modifications that fall within the scope of the invention, or their equivalents.

## Claims

1. A method for forwarding a discrete message from an initial destination to a forwarding destination within a network (10), comprising the step of:
receiving the discrete message addressed to the initial destination at a node within the network (10); **characterized by** the further steps of
determining that a user at the initial destination desires for the message to be forwarded to a user specified forwarding destination by determining (325) that a forwarding feature is activated; and
forwarding the discrete message to the specified forwarding destination.

2. The method of Claim 1, further including the step of:
requesting (50) activation of a forwarding feature.

3. The method of Claim 1, wherein the step of receiving the discrete message addressed to the initial destination at a node within the network (10) further comprises receiving the discrete message at a Mobile Switching Center / Visitor Location Register, MSC/VLR, (30) within the network (10).

4. The method of Claim 1, further including the step of:
validating the discrete message as a valid message for the forwarding destination.

5. The method of Claim 1, wherein the initial destination is associated with a user profile, wherein the network (10) includes a Switching Center (30), SC, and a Location Register (40), LR, and further including the step of requesting activation of the forwarding feature further comprises the steps of:
sending an activation feature code and the forwarding destination from the initial destination to the SC (30);
sending a message requesting activation of the forwarding feature and the forwarding destination from the SC to the LR (40); and
updating the user profile in the LR (40) to indicate the forwarding feature is activated.

6. The method of Claim 5, further including the step of:
validating the forwarding destination as a valid destination for delivering a discrete message.

7. The method of Claim 5, further including the step of sending a confirmation message (80) from the SC (30) to the initial destination, wherein the confirmation message indicates the forwarding feature is activated.

8. The method of Claim 1, wherein the initial destination is associated with a user profile, wherein the network (10) includes a Switching Center (30), SC, and a Location Register (40), LR, and wherein the step of requesting activation of a forwarding feature further comprising the steps of:
marking the forwarding feature as activated in the user profile; and
storing the forwarding destination.

9. The method of Claim 8, further including the step of:
validating the forwarding destination as a valid destination for delivering a discrete message.

10. The method of Claim 8, further including the step of:
downloading the user profile from the LR (40) to the SC (30),

11. The method of Claim 1, wherein the discrete message is a Short Message Service, SMS, message.

12. The method of Claim 1, wherein the forwarding destination is a telephone number or a network address,

13. The method of Claim 1, wherein the network (10) includes a Message Center (17), MC, and wherein the step of receiving the discrete message addressed to the initial destination at a node within the network further comprises the step of receiving a SMS Delivery Point-To-Point Invoke message including the initial destination to the MC (17).

14. The method of Claim 1, wherein the step of determining that the forwarding feature is activated further includes the step of:
determining that the forwarding feature is unconditionally activated.

15. The method of Claim 1, wherein the step of determining that the forwarding feature is activated further includes the step of:
determining that the forwarding feature is activated when the initial destination is busy.

16. The method of Claim 1, wherein the step of determining that the forwarding feature is activated further includes the step of:
determining that the forwarding feature is activated when the initial destination is not responding.

17. The method of Claim 1, wherein the step of forwarding the discrete message to the specified forwarding destination further comprises steps of:
providing the forwarding destination;
sending the discrete message to the forwarding destination, wherein the initial destination is associated with a user profile, wherein the network (10) includes a Switching Center (30), SC, and a Location Register (40), LR, and wherein the step of requesting activation of a forwarding feature further comprises the steps of:
sending an activation feature code and the forwarding destination from the initial destination to the SC (30);
sending a message requesting activation of the forwarding feature and the forwarding destination from the SC (30) to the LR (40); and
updating the user profile in the LR (40) to indicate the forwarding feature is activated.

18. The method of Claim 1, wherein the step of forwarding the discrete message to the specified forwarding destination further comprises the steps of:
providing the forwarding destination;
sending the discrete message to the forwarding destination, wherein the initial destination is associated with a user profile, wherein the network (10) includes a Switching Center (30), SC, and a Location Register (40), LR, and wherein the step of requesting activation of a forwarding feature further comprising the steps of:
marking the forwarding feature as activated in the user profile; and
storing the forwarding destination.

19. A node within a network (10) for forwarding a discrete message from an initial destination to a forwarding destination within the network (10), the Node comprising:
means for receiving the discrete message addressed to the initial destination; **characterized in that** the Node further comprises
means for determining that the message is to be forwarded to a user specified forwarding destination by determining that a forwarding feature is activated; and
means for forwarding the discrete message to the specified forwarding destination.

## Patentansprüche

1. Verfahren zur Weiterleitung einer diskreten Nachricht von einem Anfangsziel an ein Weiterleitungsziel innerhalb eines Netzes (10), umfassend den Schritt:
Empfangen der diskreten Nachricht, die an das Anfangsziel adressiert ist, an einem Knoten innerhalb des Netzes (10); **gekennzeichnet durch** die weiteren Schritte:
Bestimmen, dass ein Teilnehmer am Anfangsziel wünscht, dass die Nachricht an ein vom Teilnehmer spezifiziertes Weiterleitungsziel weitergeleitet werden soll, **durch** Bestimmen (325), dass ein Weiterleitungsmerkmal aktiviert ist; und
Weiterleiten der diskreten Nachricht an das spezifizierte Weiterleitungsziel.

2. Verfahren nach Anspruch 1, ferner umfassend den Schritt:
Anfordern (50) einer Aktivierung eines Weiterleitungsmerkmals.

3. Verfahren nach Anspruch 1, wobei der Schritt des Empfangens der diskreten Nachricht, die an das Anfangsziel adressiert ist, an einem Knoten innerhalb des Netzes (10) ferner ein Empfangen der diskreten Nachricht an einer Mobilvermittlungsstelle / einem Besucherregister MSC/VLR (30) innerhalb des Netzes (10) umfasst.

4. Verfahren nach Anspruch 1, ferner umfassend den Schritt:
Validieren der diskreten Nachricht als eine gültige Nachricht für das Weiterleitungsziel.

5. Verfahren nach Anspruch 1, wobei das Anfangsziel mit einem Teilnehmerprofil assoziiert ist, wobei das Netz (10) eine Vermittlungsstelle SC (30) und ein Lokalisierungsregister LR (40) umfasst, und ferner umfassend, dass der Schritt des Anforderns der Aktivierung des Weiterleitungsmerkmals ferner die Schritte umfasst:
Senden eines Aktivierungsmerkmalscodes und des Weiterleitungsziels vom Anfangsziel an die SC (30);
Senden einer Nachricht, welche die Aktivierung des Weiterleitungsmerkmals und das Weiterleitungsziel anfordert, von der SC an das LR (40); und
Aktualisieren des Teilnehmerprofils im LR (40), um anzuzeigen, dass das Weiterleitungsmerkmal aktiviert ist.

6. Verfahren nach Anspruch 5, ferner umfassend den Schritt:
Validieren des Weiterleitungsziels als ein gültiges Ziel zum Zustellen einer diskreten Nachricht.

7. Verfahren nach Anspruch 5, ferner umfassend den Schritt des Sendens einer Bestätigungsnachricht (80) von der SC (30) an das Anfangsziel, wobei die Bestätigungsnachricht anzeigt, dass das Weiterleitungsmerkmal aktiviert ist.

8. Verfahren nach Anspruch 1, wobei das Anfangsziel mit einem Teilnehmerprofil assoziiert ist, wobei das Netz (10) eine Vermittlungsstelle SC (30) und ein Lokalisierungsregister LR (40) umfasst, und wobei der Schritt des Anforderns einer Aktivierung eines Weiterleitungsmerkmals ferner die Schritte umfasst:
Kennzeichnen des Weiterleitungsmerkmals als aktiviert im Teilnehmerprofil; und
Speichern des Weiterleitungsziels.

9. Verfahren nach Anspruch 8, ferner umfassend den Schritt:
Validieren des Weiterleitungsziels als ein gültiges Ziel zum Zustellen einer diskreten Nachricht.

10. Verfahren nach Anspruch 8, ferner umfassend den Schritt:
Herunterladen des Teilnehmerprofils vom LR (40) auf die SC (30).

11. Verfahren nach Anspruch 1, wobei es sich bei der diskreten Nachricht um eine Kurznachrichtendienst- oder SMS-Nachricht handelt.

12. Verfahren nach Anspruch 1, wobei es sich bei dem Weiterleitungsziel um eine Telefonnummer oder eine Netzadresse handelt.

13. Verfahren nach Anspruch 1, wobei das Netz (10) eine Nachrichtenzentrale MC (17) umfasst, und wobei der Schritt des Empfangens der diskreten Nachricht, die an das Anfangsziel adressiert ist, an einem Knoten innerhalb des Netzes ferner den Schritt des Empfangens einer das Anfangsziel enthaltenden SMS-Zustellungs-Punkt-zu-Punkt-Aufrufnachricht an die MC (17) umfasst.

14. Verfahren nach Anspruch 1, wobei der Schritt des Bestimmens, dass das Weiterleitungsmerkmal aktiviert wird, ferner den Schritt umfasst:
Bestimmen, dass das Weiterleitungsmerkmal bedingungslos aktiviert wird.

15. Verfahren nach Anspruch 1, wobei der Schritt des Bestimmens, dass das Weiterleitungsmerkmal aktiviert wird, ferner den Schritt umfasst:
Bestimmen, dass das Weiterleitungsmerkmal aktiviert wird, wenn das Anfangsziel besetzt ist.

16. Verfahren nach Anspruch 1, wobei der Schritt des Bestimmens, dass das Weiterleitungsmerkmal aktiviert wird, ferner den Schritt umfasst:
Bestimmen, dass das Weiterleitungsmerkmal aktiviert wird, wenn das Anfangsziel nicht antwortet.

17. Verfahren nach Anspruch 1, wobei der Schritt des Weiterleitens der diskreten Nachricht an das spezifizierte Weiterleitungsziel ferner die Schritte umfasst:
Bereitstellen des Weiterleitungsziels;
Senden der diskreten Nachricht an das Weiterleitungsziel, wobei das Anfangsziel mit einem Teilnehmerprofil assoziiert ist, wobei das Netz (10) eine Vermittlungsstelle SC (30) und ein Lokalisierungsregister LR (40) umfasst, und wobei der Schritt des Anforderns einer Aktivierung eines Weiterleitungsmerkmals ferner die Schritte umfasst:
Senden eines Aktivierungsmerkmalscodes und des Weiterleitungsziels vom Anfangsziel an die SC (30);
Senden einer Nachricht, welche die Aktivierung des Weiterleitungsmerkmals und das Weiterleitungsziel anfordert, von der SC (30) an das LR (40); und
Aktualisieren des Teilnehmerprofils im LR (40), um anzeigen, dass das Weiterleitungsmerkmal aktiviert ist.

18. Verfahren nach Anspruch 1, wobei der Schritt des Weiterleitens der diskreten Nachricht an das spezifizierte Weiterleitungsziel ferner die Schritte umfasst:
Bereitstellen des Weiterleitungsziels;
Senden der diskreten Nachricht an das Weiterleitungsziel, wobei das Anfangsziel mit einem Teilnehmerprofil assoziiert ist, wobei das Netz (10) eine Vermittlungsstelle SC (30) und ein Lokalisierungsregister LR (40) umfasst, und wobei der Schritt des Anforderns einer Aktivierung eines Weiterleitungsmerkmals ferner die Schritte umfasst:
Kennzeichnen des Weiterleitungsmerkmals als aktiviert im Teilnehmerprofil; und
Speichern des Weiterleitungsziels.

19. Knoten innerhalb eines Netzes (10) zum Weiterleiten einer diskreten Nachricht von einem Anfangsziel an ein Weiterleitungsziel innerhalb eines Netzes (10), wobei der Knoten umfasst:
Mittel zum Empfangen der diskreten Nachricht, die an das Anfangsziel adressiert ist; **dadurch gekennzeichnet, dass** der Knoten ferner umfasst:
Mittel zum Bestimmen, dass die Nachricht an ein vom Teilnehmer spezifiziertes Weiterleitungsziel weitergeleitet werden soll, durch Bestimmen, dass ein Weiterleitungsmerkmal aktiviert ist; und
Mittel zum Weiterleiten der diskreten Nachricht an das spezifizierte Weiterleitungsziel.

## Revendications

1. Procédé d'acheminement d'un message discret depuis une destination initiale vers une destination d'acheminement à l'intérieur d'un réseau (10), comprenant les étapes de:
recevoir le message discret adressé à la destination initiale à un noeud à l'intérieur du réseau (10) ;
**caractérisé par** les étapes supplémentaires consistant à
déterminer qu'un utilisateur de la destination initiale souhaite que le message soit acheminé à une destination d'acheminement spécifiée par l'utilisateur en déterminant (325) qu'une fonctionnalité d'acheminement est activée ; et
acheminer le message discret vers la destination d'acheminement spécifiée.

2. Procédé selon la revendication 1, incluant en outre l'étape consistant à :
demander (50) l'activation d'une fonctionnalité d'acheminement.

3. Procédé selon la revendication 1, dans lequel l'étape de réception du message discret adressé à la destination initiale d'un noeud à l'intérieur du réseau (10) comprend en outre de recevoir le message discret à un centre de commutation pour les services mobiles/ registre de localisation visiteur, MSC/VLR, (30) à l'intérieur du réseau (10).

4. Procédé selon la revendication 1, incluant en outre l'étape consistant à :
valider le message discret comme un message valide pour la destination d'acheminement.

5. Procédé selon la revendication 1, dans lequel la destination initiale est associée à un profil d'utilisateur, dans lequel le réseau (10) inclut un centre de commutation (30), SC, et un registre de localisation (40), LR, et incluant en outre l'étape consistant à demander l'activation de la fonctionnalité d'acheminement comprend en outre les étapes consistant à :
envoyer un code de fonctionnalité d'activation et la destination d'acheminement depuis la destination initiale vers le SC (30) ;
envoyer un message demandant l'activation de la fonctionnalité d'acheminement et la destination d'acheminement du SC vers le LR (40) ; et
mettre à jour le profil d'utilisateur dans le LR (40) afin d'indiquer qu'une fonctionnalité d'acheminement est activée.

6. Procédé selon la revendication 5, incluant en outre l'étape consistant à :
valider la destination d'acheminement comme une destination valide pour remettre un message discret.

7. Procédé selon la revendication 5, incluant en outre l'étape d'envoi d'un message de confirmation (80) du SC (30) vers la destination initiale, dans lequel le message de confirmation indique que la fonctionnalité d'acheminement est activée.

8. Procédé selon la revendication 1, dans lequel la destination initiale est associée à un profil d'utilisateur, dans lequel le réseau (10) inclut un centre de commutation (30), SC, et un registre de localisation (40), LR, et dans lequel l'étape de demande d'activation d'une fonctionnalité d'acheminement comprenant en outre les étapes consistant à :
rendre la fonctionnalité d'acheminement activée dans le profil d'utilisateur ; et
mémoriser la destination d'acheminement.

9. Procédé selon la revendication 8, incluant en outre l'étape consistant à :
valider la destination d'acheminement comme une destination valide pour délivrer un message discret.

10. Procédé selon la revendication 8, incluant en outre l'étape consistant à :
télécharger le profil d'utilisateur du LR (40) au SC (30).

11. Procédé selon la revendication 1, dans lequel le message discret est un message de Service de Message Court, SMS.

12. Procédé selon la revendication 1, dans lequel la destination d'acheminement est un numéro de téléphone ou une adresse de réseau.

13. Procédé selon la revendication 1, dans lequel le réseau (10) inclut un centre de messages (17), MC, et dans lequel l'étape de réception du message discret adressé à la destination initiale au niveau d'un noeud à l'intérieur du réseau comprend en outre l'étape de réception d'un message d'invocation point à point de remise SMS incluant la destination initiale vers le MC (17).

14. Procédé selon la revendication 1, dans lequel l'étape de détermination que la fonctionnalité d'acheminement est activée inclut en outre l'étape consistant à :
déterminer que la fonctionnalité d'acheminement est activée inconditionnellement.

15. Procédé selon la revendication 1, dans lequel l'étape de détermination que la fonctionnalité d'acheminement est activé inclut en outre l'étape consistant à :
déterminer que la fonctionnalité d'acheminement est activée quand la destination initiale est occupée.

16. Procédé selon la revendication 1, dans lequel l'étape de détermination que la fonctionnalité d'acheminement est activée inclut en outre 'l'étape consistant à :
déterminer que la fonctionnalité d'acheminement est activée quand la destination initiale ne répond pas.

17. Procédé selon la revendication 1, dans lequel l'étape d'acheminement du message discret vers la destination d'acheminement spécifiée comprend en outre les étapes de :
fournir la destination d'acheminement ;
envoyer le message discret vers la destination d'acheminement, dans lequel la destination initiale est associée à un profil d'utilisateur, dans lequel le réseau (10) inclut un centre de commutation (30), SC, et un registre de localisation (40), LR, et dans lequel l'étape de demande d'activation d'une fonctionnalité d'acheminement comprend en outre les étapes consistant à :
envoyer un code de fonctionnalité d'activation et la destination d'acheminement depuis la destination initiale vers le SC (30) ; et
envoyer un message demandant l'activation de la fonctionnalité d'acheminement et la direction d'acheminement depuis vers le SC (30) vers le LR (40) ; et
mettre à jour le profil d'utilisateur dans le LR (40) afin d'indiquer que la fonctionnalité d'acheminement est activée.

18. Procédé selon la revendication 1, dans lequel l'étape d'acheminement du message discret vers la destination d'acheminement spécifiée comprend en outre les étapes consistant à :
fournir la destination d'acheminement ;
envoyer le message discret à la destination d'acheminement, dans lequel la destination initiale est associée à un profil d'utilisateur, dans lequel le réseau (10) inclut un centre de commutation (30), SC, et un registre de localisation (40), LR, et dans lequel 'l'étape de demande d'activation d'une fonctionnalité d'acheminement comprend en outre les étapes consistant à :
rendre la fonctionnalité d'acheminement activée dasn le profil d'utilisateur ; et
mémoriser la destination d'acheminement.

19. Un noeud à l'intérieur d'un réseau (10) pour acheminer un message discret depuis une destination initiale vers une destination d'acheminement à l'intérieur du réseau (10), le noeud comprenant :
un moyen pour recevoir le message discret adressé à la destination initiale ; **caractérisé en ce que** le noeud comprend en outre
un moyen pour déterminer que le message doit être acheminé vers une destination d'acheminement spécifiée par l'utilisateur en déterminant qu'une fonctionnalité d'acheminement est activée ; et
un moyen pour acheminer le message discret vers la destination d'acheminement spécifiée.
